Europäisches Patentamt

European Patent Office

Office européen des brevets

(19)

(11) Numéro de publication : **0 443 895 B1**

# FASCICULE DE BREVET EUROPEEN

(12)

(45) Date de publication du fascicule du brevet :
**28.10.92 Bulletin 92/44**

(51) Int. Cl.$^5$ : **F16L 37/08**

(21) Numéro de dépôt : **91400242.3**

(22) Date de dépôt : **01.02.91**

(54) **Dispositif de verrouillage de deux tubes coaxiaux.**

(30) Priorité : **02.02.90 FR 9001260**

(43) Date de publication de la demande :
**28.08.91 Bulletin 91/35**

(45) Mention de la délivrance du brevet :
**28.10.92 Bulletin 92/44**

(84) Etats contractants désignés :
**AT BE CH DE DK ES FR GB GR IT LI LU NL SE**

(56) Documents cités :
**WO-A-89/09361**
**DE-A- 4 003 461**
**GB-A- 2 051 283**
**US-A- 3 933 378**

(73) Titulaire : **Etablissements CAILLAU**
**28, rue Ernest Renan**
**F-92130 Issy-les-Moulineaux (FR)**

(72) Inventeur : **Calmettes, Lionel**
**84, Faubourg d'Orléans**
**F-41200 Romorantin Lanthenay (FR)**
Inventeur : **Detable, Pascal**
**La Guillardière, Villefranche S/Cher**
**F-41200 Romorantin Lanthenay (FR)**

(74) Mandataire : **Descourtieux, Philippe et al**
**CABINET BEAU de LOMENIE 55 rue**
**d'Amsterdam**
**F-75008 Paris (FR)**

EP 0 443 895 B1

## Description

Dans de nombreux secteurs industriels, on a fréquemment besoin d'immobiliser deux tubes après leur emmanchement, généralement à frottement doux, qui les a rendus coaxiaux l'un à l'autre. C'est notamment le cas lorsque l'on désire procéder au raccordement de deux conduits, par exemple ceux constituant des éléments d'un circuit de refroidissement d'un moteur de véhicule. Dans ce cas, et notamment si le raccordement des deux conduits doit être réalisé automatiquement au moyen d'un appareil motorisé, tel qu'un robot, il est nécessaire que l'immobilisation des deux conduits soit obtenue par un seul mouvement, de préférence au cours de la translation conduisant à leur emmanchement.

D'une façon plus générale, l'immobilisation de deux tubes coaxiaux peut être recherchée, aussi bien à l'égard d'une rotation relative que d'une translation, chaque fois que l'on désire obtenir une liaison mécanique efficace entre les deux tubes.

On a déjà proposé des dispositifs permettant de réaliser l'immobilisation recherchée mais, en général, lorsqu'ils sont efficaces vis-à-vis d'efforts quelque peu élevés visant à déboîter les tubes l'un de l'autre, ces dispositifs comportent des organes complémentaires de vissage ou bien présentent un encombrement important. Ces deux inconvénients ne sont plus admissibles dans certains secteurs techniques, soit pour des raisons esthétiques, soit aussi à cause du faible espace disponible pour la mise en place de la liaison des tubes. Des prix de revient relativement élevés sont enfin fréquemment la conséquence des divers inconvénients des dispositifs d'immobilisation connus de deux tubes.

Cependant le brevet US-A-3.933.378 a déjà cherché à remédier aux inconvénients de certains dispositifs conus et a décrit une connexion rapide de tubes, généralement métalliques, mais le dispositif proposé par ce document antérieur, outre qu'il est difficilement démontable s'il est utilisé dans des zones encombrées, par exemple sur un moteur de véhicule, ne permet pas un contrôle facile et visuel du verrouillage de la connexion puisque les organes de verrouillage risquent d'être cachés par une cage fixée au tube interne.

D'autre part les brevets DE-A-3.815.168, 3.815.170, 3.815.171, 3.815.172, 3.815.173 et 3.914.645 ont également proposé des solutions au problème de la connexion rapide de deux tubes, grâce en particulier à l'utilisation de pattes flexibles portées par le tube externe et coopérant avec un épaulement du tube interne. Mais ces dispositifs connus, outre qu'ils nécessitent une fabrication relativement onéreuse, ne semblent pas procurer dans la pratique une sécurité suffisante du verrouillage. Comme la plupart des autres dispositifs connus, ils autorisent des montages incorrects qu'il faut ensuite modifier.

Cela est notamment dû au fait qu'ils possèdent plusieurs pattes flexibles angulairement décalées de façon régulière de sorte que "l'indexation angulaire" reste incertaine.

La présente invention a donc pour objet une connexion rapide, du genre précité, assurant par des moyens simples l'immobilisation de deux tubes coaxiaux, tant vis-à-vis d'une translation axiale que d'une rotation relative, et interdisant toute possibilité d'un montage incorrect grâce à une "indexation angulaire" certaine. Dans ce qui suit une telle connexion sera dénommée "dispositif de verrouillage" et on notera dès maintenant qu'il sera avantageusement utilisé sur des dispositifs de raccordement de deux conduits, tels que ceux décrits dans la demande EP-A-0440564 (publiée 07.08.91)

Un tel dispositif de verrouillage comporte, de façon connue, une patte longitudinale, élastiquement flexible dans le sens radial, et liée au tube externe. Cette patte présente au moins une zone susceptible de venir en appui axial, après emmanchement des tubes, avec un épaulement prévu en correspondance sur la face extérieure du tube interne et faisant radialement saillie par rapport à cette dernière.

Selon l'invention le dispositif de verrouillage est constitué par la combinaison d'aménagements simples des extrémités des tubes interne et externe, destinées à être emmanchées l'une dans l'autre. La paroi du tube externe présente une rainure, ouverte à l'extrémité du tube, dont les bords latéraux sont parallèles à l'axe du tube. D'autre part, la face extérieure du tube interne présente deux surfaces de guidage faisant radialement saillie, lesdites surfaces étant parallèles à l'axe du tube et espacées l'une de l'autre d'une distance sensiblement égale à celle séparant les bords latéraux de la rainure du tube externe. Enfin, l'extrémité libre de la patte longitudinale flexible, ou patte de verrouillage, est située sensiblement dans le plan transversal de l'extrémité du tube externe.

Bien évidemment le dispositif de verrouillage peut comporter deux ou plusieurs pattes flexibles, ainsi que deux ou plusieurs rainures et des couples de surfaces de guidage, en nombre suffisant. Il apparaît toutefois que dans de nombreuses applications la multiplication des aménagements d'extrémité des tubes ne sera pas indispensable.

De toutes façons, dans le cas d'une pluralité de pattes flexibles, de rainures et de couples de surfaces de guidage, il sera essentiel, pour bénéficier de tous les avantages de l'invention, que ces éléments soient irrégulièrement répartis sur la périphérie des tubes correspondants.

Grâce aux dispositions prévues, le verrouillage axial et en rotation de deux tubes emmanchés l'un dans l'autre s'effectue simplement et de façon très sure au cours de l'emmanchement, sans aucune autre intervention. Cette opération peut donc être automatisée au moyen des machines actuellement disponibles.

L'invention sera mieux comprise et diverses caractéristiques secondaires ainsi que ses avantages apparaîtront au cours de la description qui va suivre en référence aux dessins annexés dans lesquels :

- La figure 1a et la figure 1b sont des vues schématiques en coupe axiale des extrémités, aménagées selon l'invention, de deux tubes avant leur emmanchement.

- La figure 2 est une vue analogue aux précédentes après emmanchement des tubes.

- La figure 3 est une coupe transversale suivant III-III de la figure 1a.

- La figure 4 est une coupe transversale suivant IV-IV de la figure 1b.

- La figure 5a et la figure 5b sont des vues, partiellement en coupe axiale, des extrémités aménagées selon l'invention, de deux tubes avant leur emmanchement, dans le cas d'une première variante avantageuse de réalisation.

- La figure 6a et la figure 6b sont des vues partielles, suivant les flèches **F** des aménagements représentés sur les figures 5a et 5b.

- La figure 7 est une vue analogue aux figures 5a et 5b après emmanchement des tubes.

- La figure 8 est une vue partielle du dispositif de verrouillage, suivant la flèche **F₁** de la figure 7.

- La figure 9a et la figure 9b sont des vues partielles en coupe axiale, des extrémités aménagées selon l'invention, de deux tubes avant leur emmanchement, dans le cas de la deuxième variante avantageuse de réalisation.

- La figure 10a et la figure 10b sont des vues partielles, suivant les flèches **F'**, des aménagements représentés sur les figures 9a et 9b.

- La figure 11 est une vue analogue aux figures 9a et 9b après emmanchement des tubes.

- La figure 12 est une vue partielle du dispositif de verrouillage, suivant la flèche **F₁'** de la figure 11.

- La figure 13 est une vue de détail du pontet supportant la patte flexible, dans le cas d'une première variante de réalisation par rapport à la figure 9b.

- La figure 14 est une vue de détail du pontet supportant la patte flexible, dans le cas d'une deuxième variante de réalisation par rapport à la figure 9b.

- La figure 15 est une vue suivant la flèche **F₂** de la figure 14.

- La figure 16 est une vue du pontet représenté sur la figure 14, après emmanchement des deux tubes.

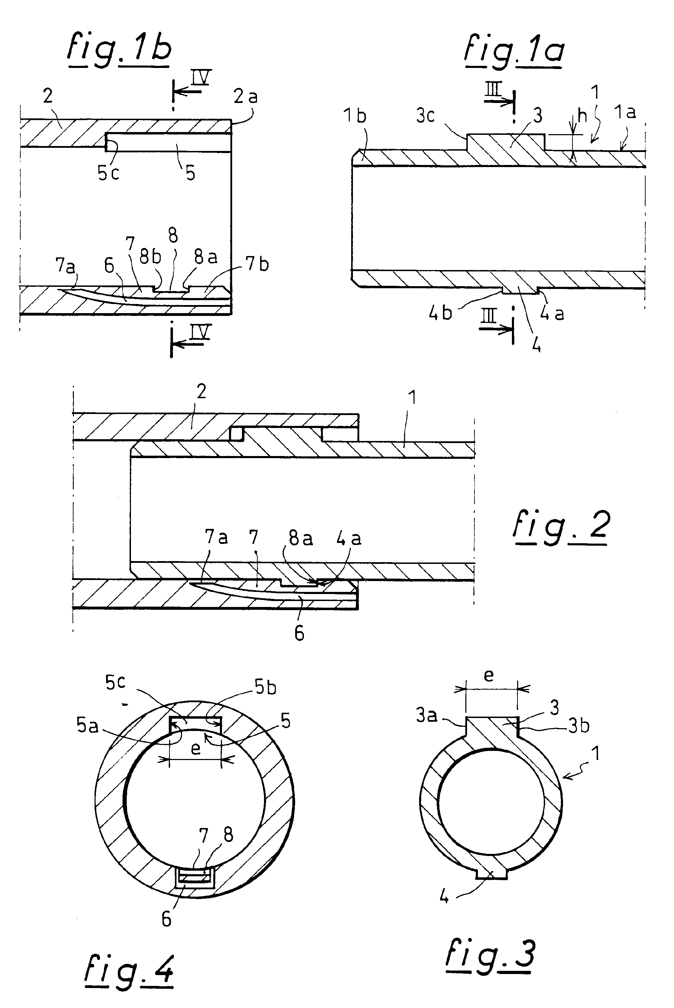

Si l'on se reporte tout d'abord aux figures 1 à 4 on voit un tube interne **1** destiné à être emmanché dans un tube externe **2** pour constituer un ensemble de deux tubes coaxiaux. Le diamètre intérieur du tube **2** est sensiblement égal au diamètre extérieur du tube **1**. Les parois de ces deux tubes ont été représentées avec une épaisseur relativement importante pour faciliter les explications des aménagements prévus à leurs extrémités en regard, mais il est évident, ainsi que cela sera souligné ultérieurement, que l'invention n'impose aucune exigence particulière à cet égard.

Sur la face extérieure **1a** du tube **1** sont disposés un bossage **3** et une protubérance **4**, par exemple diamétralement opposée au bossage **3**.

Le bossage **3** présente une forme généralement allongée dans le sens axial du tube **1** et ses faces latérales **3a** et **3b** sont parallèles à l'axe du tube et font saillie d'une hauteur **h** par rapport à la surface extérieure **1a**. La protubérance **4**, généralement de dimensions moins importante que le bossage **3**, peut présenter une forme sensiblement carrée, l'une au moins de ses extrémités axiales **4a** et **4b**, et notamment l'extrémité **4a** la plus éloignée de l'extrémité **1b** du tube, étant située dans un plan transversal du tube **1**, de façon à constituer un épaulement transversal.

On notera que la zone **4b** de la protubérance **4**, la plus proche axialement de l'extrémité **1a** du tube, est cependant plus éloignée de cette extrémité que la zone correspondante **3c** du bossage **3**. Les raisons de cette disposition apparaîtront plus loin.

Sur la face intérieure du tube externe **2** est ménagée une rainure **5** dont les bords latéraux **5a** et **5b** sont parallèles à l'axe du tube et sont espacés l'un de l'autre d'une distance **e** sensiblement égale à celle séparant les faces latérales opposées **3a** et **3b** du bossage **3**. La profondeur de la rainure est au moins égale à la saillie radiale **h** des faces latérales **3a** et **3b**.

La rainure **5** débouche à l'extrémité **2a** du tube **2** et sa longueur axiale est, de préférence, au moins égale à celle du bossage **3**. Elle est déterminée par une face terminale **5c** dont la position sera précisée plus loin.

Diamétralement opposée à la rainure **5** et logée dans un évidement **6** de la paroi du tube **2**, se trouve une patte longitudinale **7**. A l'état libre et comme représenté sur la figure 1b, la face interne de la patte **7** coïncide sensiblement avec la surface cylindrique interne de la paroi du tube **2**.

La patte **7** est fixée, au voisinage de son extrémité interne **7a**, à la paroi du tube **2** et son extrémité externe **7b** est située sensiblement dans le plan transversal de l'extrémité **2a** du tube **2**, de préférence à l'intérieur du tube. La forme de la patte **7** et/ou ses moyens de fixation à la paroi du tube la rendent élastiquement flexible ou mobile, autour d'un axe transversal situé au voisinage de son extrémité interne **7a**, à l'intérieur de l'évidement **6**.

Au voisinage de son extrémité externe **7b**, la patte **7** présente un logement **8**, par exemple de forme sensiblement identique à celle de la protubérance **4**. On soulignera ici que le logement **8** peut être constitué par un trou traversant l'épaisseur de la patte. Dans l'exemple représenté, la profondeur du logement **8** est sensiblement égale à la saillie radiale de la protubérance **4** par rapport à la surface extérieure **1a** du tube **1**. L'une au moins des extrémités longitudinales **8a** et **8b** du logement **8**, notamment l'extrémité **8a** voisine de l'extrémité **7b** de la patte **7**, est située dans un plan transversal du tube **1**, perpendiculaire à sa surface intérieure. La distance axiale entre les deux extrémités **8a** et **8b** est, de préférence, sensiblement égale à celle qui sépare les deux extrémités axiales **4a** et **4b** de la protubérance **4**.

L'homme de métier a déjà compris le fonctionnement du dispositif de verrouillage qui vient d'être décrit. L'extrémité libre **1b** est tout d'abord emmanchée dans l'extrémité libre **2a**, quelle que soit l'orientation relative du bossage **3** et de la protubérance **4**, de la rainure **5** et de la patte **7**.

Lorsque le bossage **3** vient en appui sur l'extrémité du tube **2**, le mouvement d'emmanchement ne peut être poursuivi qu'après mise en coïncidence du bossage **3** et de l'ouverture terminale de la rainure **5**. L'orientation relative du tube externe et du tube interne est alors fixée et la protubérance **4** se trouve nécessairement dans l'alignement de la patte **7**.

Le mouvement d'emmanchement se poursuit, les faces latérales **3a** et **3b** du bossage étant guidées par les bords latéraux **5a** et **5b** de la rainure. L'extrémité **7b** de la patte **7** est soulevée par la protubérance **4** et la patte **7**, dans son ensemble, est repoussée élastiquement dans l'évidement **6**. Lorsque la protubérance **4** se trouve en regard du logement **8**, la patte **7** revient à sa position initiale, le logement **8** coiffant et emprisonnant cette protubérance. Si, comme on l'a indiqué plus haut, les extrémités axiales **4a** et **4b** de la protubérance **8a** et **8b** du logement sont perpendiculaires aux surfaces extérieures ou intérieures des tubes, elles constituent des zones complémentaires d'appui axial, assurant l'immobilisation axiale des deux tubes l'un par rapport à l'autre, aussi bien dans le sens de l'emmanchement que dans celui du déboîtement.

On pourrait toutefois concevoir que seules les extrémités axiales **4a** et **8a** soient conformées de façon à constituer des zones complémentaires d'appui axial, assurant l'immobilisation dans le sens du déboîtement. Dans ce cas pour limiter l'emmanchement des deux tubes l'un dans l'autre, on pourrait utiliser d'autres moyens. En particulier, la longueur de la rainure **5** pourrait être déterminée de façon que son extrémité **5a** constitue une zone d'appui axial pour l'extrémité longitudinale antérieure **3c** du bossage **3**, après que l'épaulement **4a** a atteint ou même légèrement dépassé l'extrémité **8a** du logement **8**.

Une telle disposition permet de réaliser la protubérance **4** sous forme d'une simple rampe pour l'extrémité **7b** de la patte **7**.

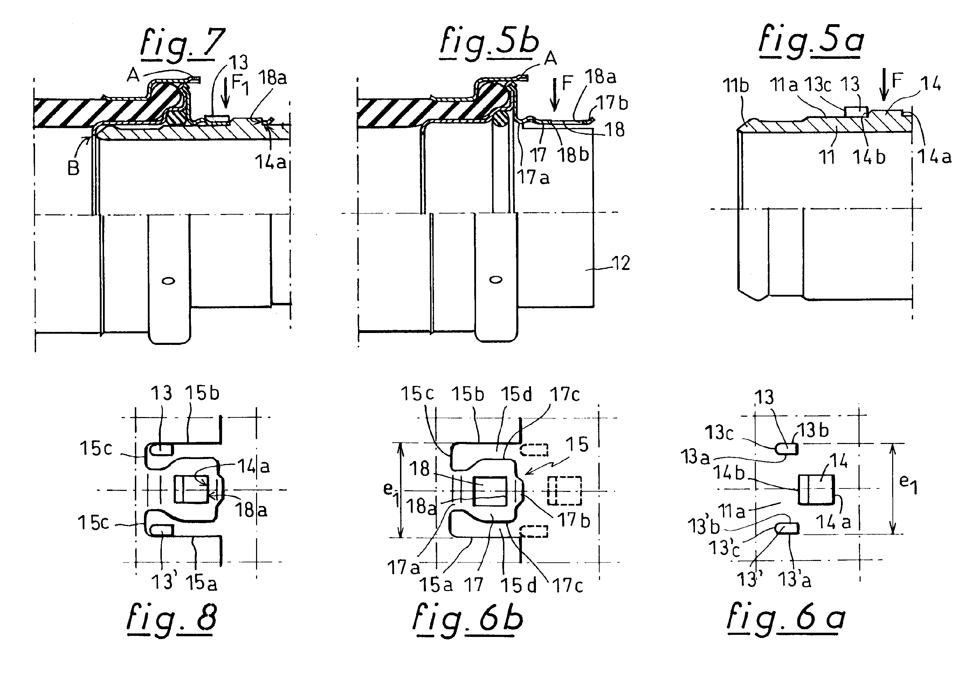

Si l'on se reporte maintenant aux figures 5 à 8 on voit une variante avantageuse de réalisation qui peut être associée à un dispositif de raccordement d'un tuyau souple sur un embout tubulaire rigide tel que celui qui fait l'objet de la demande de brevet précitée. Les éléments déjà décrits portent les mêmes références augmentées de 10. L'une des principales différences entre les deux réalisations est que le tube externe est constitué par une tôle métallique mince qui, par conséquent, peut être facilement découpée et éventuellement formée par emboutissage.

Ainsi qu'on le voit sur les figures, le tube externe **12** est un appendice en tôle mince, fixé à l'extrémité d'un tuyau souple dans les conditions exposées dans la demande de brevet précitée. Il est destiné à être emmanché sur un embout rigide ou tube interne **11**, généralement en matière plastique. Sur la surface extérieure **11a** on retrouve la protubérance **14** qui est toutefois associée à deux bossages **13-13'** disposés symétriquement l'un de l'autre par rapport au plan diamétral passant par la protubérance **14**. On notera cependant qu'à l'ensemble des deux bossages **13-13'** correspond une distance $e_1$ entre leurs faces latérales opposées **13b-13'a**. D'autre part, on retrouve la particularité, signalée plus haut, selon laquelle la zone **14b** de la protubérance **14**, la plus proche de l'extrémité **11b** du tube **11**, est plus éloignée de cette extrémité que les zones correspondantes **13c** des bossages **13**. L'épaulement transversal **14a** est sensiblement perpendiculaire à la surface extérieure **11a** du tube, cependant que l'extrémité opposée **14b** de la protubérance est de préférence constituée par une rampe inclinée.

Le tube externe **12** présente une rainure longitudinale **15** dont les deux bords latéraux **15a-15b** sont espacés d'une distance $e_1$ sensiblement égale à celle séparant les faces latérales opposées **13b-13'a** des bossages **13-13'**.

Entre les bords **15a-15b** de la rainure s'étend une patte longitudinale **17** dont l'extrémité libre **17b** est légèrement courbée vers l'extérieur. La patte **17** est obtenue par un découpage convenable de la paroi du tube externe **12** à laquelle elle reste fixée par son extrémité **17a**, de préférence de plus faible largeur, qui constitue une zone élastique de pliage. A l'état libre, et comme on le voit sur la figure 5b, la patte **17** est située sur la périphérie du tube **12**.

Les bords longitudinaux **17c** de la patte **17** sont parallèles aux bords **15a-15b** de la rainure et définissent avec eux deux rainures secondaires **15d** dont la largeur est voisine de celle de chacun des bossages **13-13'**.

Enfin la patte **17** présente dans sa partie centrale un trou **18** dont la forme correspond de préférence à celle de la protubérance **14**. Plus précisément le bord transversal **18a** est perpendiculaire aux bords **15a-15b** de la rainure.

La mise en place du dispositif de verrouillage est analogue à celle qui a été décrite plus haut. L'emmanchement complet du tube **12** sur le tube **11** nécessitera évidemment la présentation correcte des bords **15a-15b** de la rainure **15** dans l'alignement des faces latérales opposées **13b-13'a** des bossages **13-13'** (position représentée en trait ponctué sur la figure 6b). A cet effet, et notamment dans le cas d'un emmanchement automatisé au moyen d'un robot, il sera avantageusement prévu, sur un élément lié au tube **12**, un organe d'indexage approprié désigné par la référence A. La poursuite de l'emmanchement provoquera d'abord la coopération des surfaces de guidage **13b-13'a** avec les bords latéraux **15a-15b** de la rainure, puis le soulèvement de la patte **17**, par la coopération de son extrémité **17b** avec la rampe **14b** de la protubérance **14**. Le verrouillage est terminé lorsque le bord transversal **18a** du trou **18** est venu prendre appui derrière l'épaulement transversal **14a** de la protubérance **14**, la patte **17** étant alors ramenée élastiquement à son état libre (figures **7** et **8**).

L'immobilisation en rotation des deux tubes **11** et **12** est assurée par la coopération des bords **15a-15b** de la rainure **15** et des faces latérales **13b-13'a** des bossages **13-13'**, cependant que l'immobilisation axiale au débottement est obtenue par l'appui mutuel du bord **18a** du trou **18** et de l'épaulement **14a** de la protubérance **14**.

L'immobilisation axiale dans le sens de l'emmanchement peut être obtenue par l'appui des bossages **13-13'** sur le fond **15c** de la rainure **15** ou par tout autre appui convenable du tube **11** sur une butée liée au tube **12**, telle que celle indiquée en **B** sur la figure **7**.

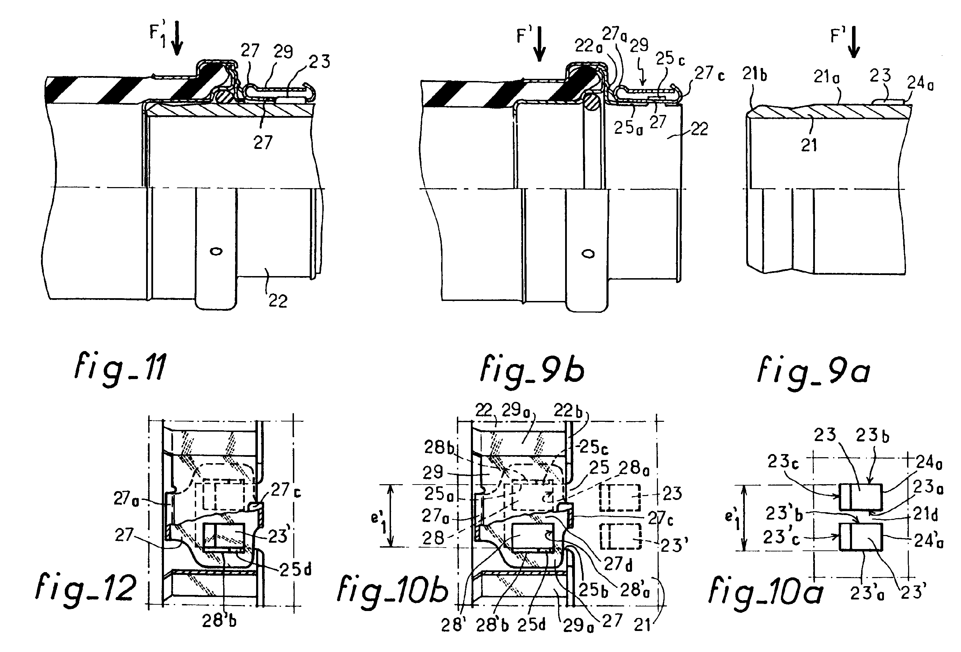

Si l'on se reporte maintenant aux figures **9 à 12**, on voit une deuxième variante de réalisation, analogue à celle qui vient d'être décrite en référence aux figures **5 à 8**. Comme la précédente, elle sera avantageusement associée à un dispositif de raccordement d'un tuyau souple sur un embout rigide tel que celui qui fait l'objet de la demande de brevet précitée. Les éléments déjà décrits portent les mêmes références, à nouveau augmentées de **10**. De même que dans la variante précédente, le tube externe est constitué par une tôle métallique mince, qui peut être facilement découpée et emboutie.

Sur la surface extérieure **21a** de l'embout rigide **21**, qui constitue le tube interne, on retrouve deux bossages allongés **23** et **23'** dont les faces latérales opposées **23b-23'a** font radialement saillie et sont parallèles à l'axe du tube, étant espacées l'une de l'autre d'une distance transversale $\overline{e}'_1$. Les extrémités longitudinales de ces bossages sont situées dans deux plans transversaux du tube, de préférence, comme représenté au dessin, dans le même plan transversal pour chaque couple d'extrémités correspondantes. Les extrémités **23c** et **23'c**, les plus proches de l'extrémité **21b** du tube, présentent avantageusement une forme de rampe, tandis que les extrémités **24a** et **24'a** constituent des épaulements faisant radialement saillie par rapport à la surface extérieure **21a** du tube. Bien que les bossages **23** et **23'** puissent n'en constituer qu'un seul, ils seront de préférence distincts l'un de l'autre, leurs faces latérales **23a** et **23'b** étant séparées par une petite distance de façon à ménager une encoche longitudinale **21d** dont l'utilité apparaîtra plus loin.

Le tube externe **22** présente une rainure longitudinale **25** dont les bords longitudinaux **25a-25b** sont parallèles à l'axe du tube et sont espacés d'une distance sensiblement égale à celle séparant les faces latérales opposées **23b-23'a** des bossages **23-23'**. De préférence, et comme on le voit bien sur les figures 9b et 10b, les bords **25a** et **25b** de la rainure sont munis de petites pattes **25c** et **25d** perpendiculaires au plan de la rainure et améliorant, ainsi qu'on le précisera plus loin, le rôle de guidage des bords de la rainure.

Un pontet **29** supportant la patte longitudinale flexible **27** est fixé au tube externe **22** au dessus de la rainure **25**. Ce pontet, de préférence en acier à ressort, comporte sur chacun de ses bords latéraux un repli **29a** dont l'extrémité gauche, légèrement coudée, prend appui (fig. 9b) sur une protubérance **22a** liée au tube **22** tandis que son extrémité droite est simplement sertie sur le bord terminal **22b**, replié vers l'arrière, du tube **22** (fig. 10b).

La patte **27** est constituée par un repli de la face supérieure du pontet **29** se raccordant à elle par une boucle **27a**, bien visible en coupe sur la figure 9b. Elle présente une largeur sensiblement plus grande que celle de la rainure **25** ainsi qu'on le voit sur la figure 10b. A son extrémité libre, située sensiblement dans le plan transversal du bord terminal **22b** du tube, la patte **27** comporte un crochet **27c** replié sur la face supérieure du pontet **29**.

La patte **27** présente deux ouvertures **28** et **28'** dont le contour correspond à celui des bossages **23** et **23'**. En particulier les bords transversaux **28** et **28'a**, les plus proches du bord terminal **22b** du tube externe, sont, de préférence, dans le même plan transversal, cependant que les bords longitudinaux opposés **28b** et **28'b** sont avantageusement décalés latéralement par rapport aux bords **25a-25b** de la rainure, permettant ainsi le passage des pattes **25c** et **25d** dans les ouvertures **28** et **28'**.

Dans l'exemple représenté, il subsiste une languette métallique **27d** dont la largeur correspond à celle de l'encoche **21d** entre les bossages **23-23'** et qui participe à la résistance mécanique du bord transversal terminal de la patte **27**. Il est toutefois évident que si les bossages **23-23'** n'en constituent qu'un seul, il en sera de même des ouvertures **28-28'**.

A l'état libre, la patte **27** repose sur les bords longitudinaux de la rainure **25** et y est élastiquement maintenue par le ressort que constitue la boucle **27a**.

La mise en place du dispositif de verrouillage est analogue à celle qui a été décrite plus haut. Après une présentation correcte des bossages **23-23'**, en regard de l'ouverture de la rainure **25** (position représentée en trait ponctué sur la figure 10b), l'emmanchement du tube **21** dans le tube **22** provoque d'abord le soulèvement de la patte **27** par les rampes **23c-23'c** des bossages. Les faces latérales **23b-23'a** de ces derniers sont guidées longitudinalement par les bords **25a-25b** de la rainure et surtout par leurs petites pattes **25c-25d**. A la fin de l'emmanchement, les bords transversaux **28a-28'a** des ouvertures de la patte **27** viennent en appui axial derrière les épaulements **24a-24'a** des bossages **23-23'**, cependant que la patte **27** reprend la position qu'elle occupait à l'état libre sous l'effet de son ressort **27a** (fig. 11).

Les deux tubes sont alors immobilisés axialement et en rotation, tant vis-à-vis du déboîtement que dans le sens de l'emmanchement. A cet égard les dispositions décrites plus haut, seront, ici encore, utilisables.

Quel que soit le mode de réalisation envisagé, il sera généralement intéressant de prévoir des moyens permettant le contrôle visuel et facile du bon verrouillage des deux tubes, c'est-à-dire du retour de la patte de verrouillage à sa position à l'état libre, après coopération des ouvertures de la patte et de l'épaulement prévu en correspondance sur la surface extérieure du tube interne.

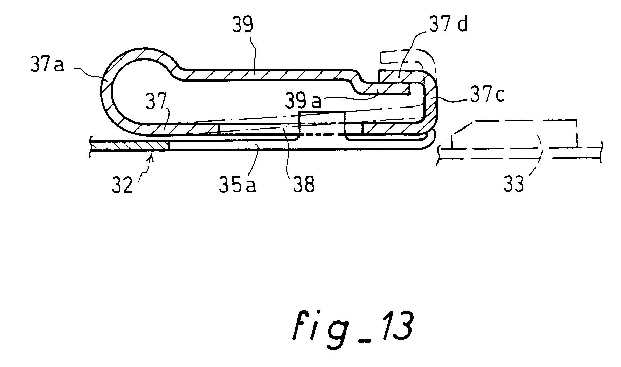

A cet effet et si l'on se reporte maintenant à la figure 13 on voit une variante avantageuse du pontet recouvrant la rainure du tube externe et représenté aux figures 9b et 10b. Les éléments déjà décrits portent les mêmes numéros de référence augmentés à nouveau de 10.

Comme on l'a déjà indiqué, le pontet **39** est disposé au dessus de la rainure longitudinale ménagée dans le tube externe **32** et la patte **37** est constituée par un repli raccordé au pontet par la boucle **37a**. Du côté de l'entrée de la rainure, située à droite de la figure 13, la patte **37** se termine par un crochet **37c** replié au dessus de la face supérieure du pontet.

Cette dernière présente un embrèvement **39a** dont la profondeur correspond sensiblement à l'épaisseur de la tôle et dont la largeur (dans le sens perpendiculaire à la figure) est avantageusement voisine de celle du crochet **37c**. Celui-ci possède un repli **37d** dont le plan est parallèle à celui de la patte **37**.

Au cours de l'emmanchement des tubes le bossage **33** soulève la patte **37** et son repli **37d** fait saillie au dessus de la face supérieure du pontet **39** (position en trait ponctué). Après avoir été guidé par le bord longitudinal **35a** de la rainure, le bossage **33** vient en regard de l'ouverture **38** de la patte **37**. Sous l'effet de son ressort **37a**, la patte **37** reprend la position représentée en trait plein sur la figure, ce qui assure le verrouillage.

Si pour une raison quelconque l'emmanchement des tubes n'est pas suffisant pour provoquer leur verrouillage, la patte **37** et son repli **37d** sont maintenus dans la position représentée en trait ponctué, ce qui sera facilement décelé par l'opérateur, au moyen d'un simple contrôle visuel.

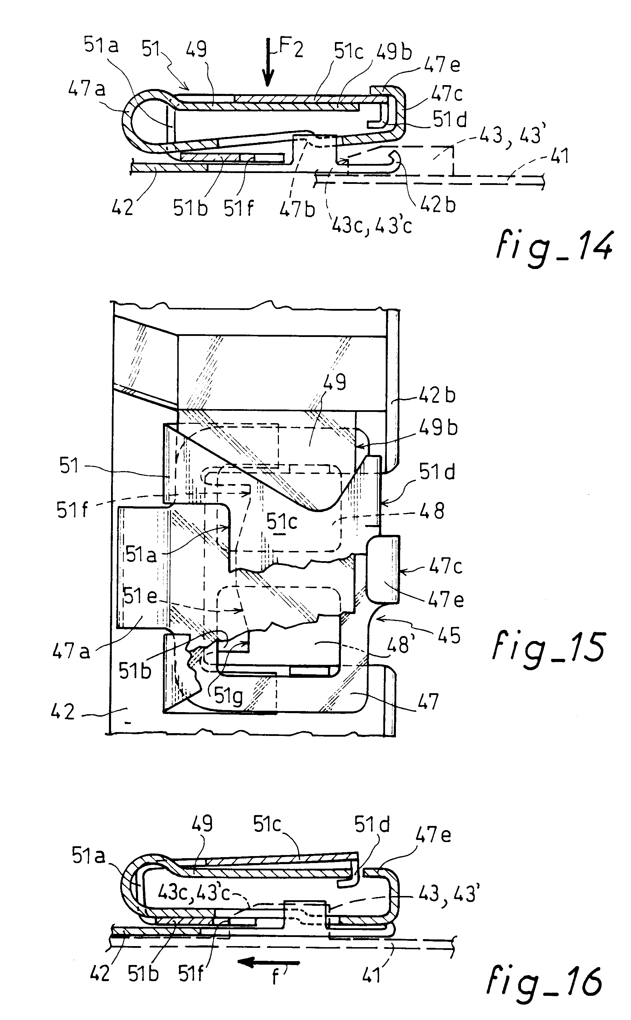

Si l'on se reporte enfin aux figures 14 à 16 on voit une autre variante des moyens permettant le contrôle visuel du verrouillage. Les éléments déjà décrits et représentés sur les figures 9b et 10b portent les mêmes références augmentées de 20.

Le pontet **49** disposé au dessus de la rainure du tube externe **42** supporte la patte **47** par l'intermédiaire de la boucle **47a** formant ressort. On notera cependant que la patte **47** présente un décrochement **47b** dont l'utilité apparaîtra plus loin, cependant que son crochet terminal **47c** est situé en deçà du bord terminal **49b** du pontet **49**.

Un cavalier **51** en matériau élastique, de préférence en acier à ressort, est constitué par une feuille pliée en forme de **U** entourant le pontet **49** et sa patte **47**. Le fond du **U** est situé dans la zone de la boucle **47a** et présente un évidement **51a**, bien visible sur la figure 15, permettant le passage de la boucle **47a**.

La branche inférieure **51b** du cavalier est située au dessous de la patte **47** et s'étend en deçà du décrochement **47b** de la patte. La branche supérieure **51c** du cavalier s'étend au dessus de la face supérieure du pontet **49**. Dans sa partie centrale cette branche supérieure **51c** est susceptible d'être en prise (figures 14 et 15) avec le repli terminal **47e** du crochet **47c** de la patte **47**, cependant que, de part et d'autre de cette partie centrale, elle se prolonge par des crochets **51d** dirigés vers la branche inférieure **51b**.

Ainsi le cavalier **51** qui vient d'être décrit constitue un organe monté coulissant axialement par rapport au pontet **49** et à sa patte **47** et susceptible d'être en prise avec un élément de cette dernière. De plus, pour des raisons que l'on précisera plus loin, il faut ici noter qu'à l'état libre (non représenté) les branches **51b-51c** du cavalier **51** sont légèrement divergentes, de sorte qu'elles subissent une déformation élastique lorsqu'elles sont disposées parallèles l'une à l'autre (figure 14). Le cavalier **51** constitue aussi un ressort qui tend à écarter l'une de l'autre les extrémités de ses branches **51b** et **51c**.

La branche inférieure **51b** du cavalier présente cependant, ainsi qu'on le voit sur la figure 15, un bord terminal **51e** comportant, au dessous des ouvertures **48-48'** de la patte **47**, deux saillies longitudinales **51f** et **51g**, plus proches de l'extrémité du tube externe **42** que ne l'est le reste du bord **51e**.

Avant l'emmanchement des tubes **41** et **42**, le cavalier **51** est dans la position représentée sur la figure 14, et la partie centrale terminale de sa branche supérieure **51c** s'appuie sous le repli terminal **47e** de la patte **47**. Celle-ci est donc soulevée, contre le ressort constitué par sa boucle **47a**, au dessus de la rainure **45**, cependant que la branche supérieure **51c** du cavalier est appliquée sur la face supérieure du pontet **49** et que le ressort constitué par le cavalier lui-même est comprimé.

Lorsque les bossages **43-43'** sont engagés dans la rainure **45** ils soulèvent encore, si nécessaire, la patte **47** et leur face frontale **43c-43'c** vient en contact avec les saillies **51f-51g** de la branche inférieure **51b** du cavalier **51**. L'emmanchement des tubes se poursuivant, les bossages font coulisser la branche inférieure **51b** dans le sens de la flèche **f** jusqu'à la position représentée sur la figure 16. La partie centrale terminale de la branche supérieure **51c** quitte alors son appui sous le repli **47e**, ce qui libère la patte **47** qui vient donc occuper sa position de verrouillage du tube **41** dans les conditions déjà décrites.

Simultanément la branche supérieure **51c** du cavalier se détend élastiquement en prenant une position divergente par rapport à la branche inférieure **51b**. Ce mouvement reste néanmoins limité grâce à la présence des crochets latéraux **51d** qui viennent prendre appui sous le pontet **49**. Cette position du cavalier **51** permet un contrôle visuel et facile du verrouillage par l'opérateur.

En outre on peut, dans le même but, prévoir un repère coloré sur la partie centrale terminale de la branche supérieure **51c** du cavalier, dans la zone susceptible d'être recouverte par le repli terminal **47e** de la patte **47**. Ce repère ne devient donc visible qu'après que la patte **47** est arrivée dans sa position de verrouillage.

La variante qui vient d'être décrite présente un avantage supplémentaire important par rapport à celle représentée sur la figure 13.

Il peut en effet se produire des défauts de fabrication des bossages prévus sur le tube interne **41**, notamment si ce dernier est réalisé par moulage en matière plastique. Il importe alors que l'emmanchement des tubes ne puisse être poursuivi jusqu'à sa phase terminale et que l'attention de l'opérateur soit rapidement attirée par ce défaut.

Si l'on suppose, par exemple, que le(s) bossage(s) **43-43'** n'existe(nt) pas, l'appui simultané des faces frontales **43c-43'c** sur les saillies **51f-51g** ne se produira pas. Dans ce cas, le cavalier **51** ne coulissera pas normalement, de la façon décrite plus haut, ce qui empêchera la partie centrale terminale de la branche **51c** de se dégager du repli terminal **47e**. L'opérateur sera donc immédiatement averti de l'anomalie par un simple contrôle visuel.

De plus, si seulement l'une des saillie **51f-51g** est atteinte par le(s) bossage(s), le cavalier **51** pivotera au lieu de coulisser, interdisant là encore le dégagement des éléments **51c** et **47e** et attirant de ce fait l'attention de l'opérateur.

Ainsi que l'homme de métier s'en est rendu compte, les dispositions proposées par l'invention peuvent être réalisées de façon très économique, malgré le grand nombre d'avantages qu'elles procurent. En particulier la sécurité de montage et de fonctionnement sera spécialement utile et appréciée dans le cas où l'emmanchement des tubes interne et externe est obtenu par des appareils automatisés.

**Revendications**

1. Dispositif de verrouillage de deux tubes coaxiaux destinés à être emmanchés l'un dans l'autre comportant une patte longitudinale, élastiquement flexible dans le sens radial, liée au tube externe et présentant au moins une zone susceptible de venir en appui axial, après emmanchement des deux tubes, avec un épaulement prévu en correspondance sur la face extérieure du tube interne et faisant radialement saillie par rapport à cette dernière, caractérisé en ce que la paroi du tube externe (**2, 12, 22**) présente une rainure (**5, 15, 25**), ouverte à l'extrémité du tube, dont les bords latéraux sont parallèles à l'axe du tube et en ce que la face extérieure du tube interne (**1, 11, 21**) présente deux surfaces de guidage (**3a-3b, 13b-13'a, 23b-23'a**) faisant radialement saillie, lesdites surfaces étant parallèles à l'axe du tube et espacées l'une de l'autre d'une distance sensiblement égale à celle séparant les bords latéraux de la rainure du tube externe, cependant que l'extrémité libre de la patte de verrouillage (**7, 17, 27**) est située sensiblement dans le plan transversal de l'extrémité du tube externe.

2. Dispositif selon la revendication 1, caractérisé en ce que la patte flexible (**17, 27**) est métallique et est située sensiblement en regard de la rainure longitudinale (**15, 25**) du tube externe et en ce que son plan diamétral longitudinal de symétrie est le même que celui de ladite rainure.

3. Dispositif selon la revendication 1, caractérisé en ce que les surfaces du guidage (**3a-3b, 13b-13'a, 23b-23'a**) prévues sur le tube interne sont constituées par les faces latérales opposées l'une de l'autre d'au moins un bossage allongé (**3, 13-13', 23-23'**) faisant saillie radialement sur la face extérieure du tube interne.

4. Dispositif selon la revendication 3, caractérisé en ce qu'il existe deux bossages (**13-13', 23-23'**) symétriques l'un de l'autre Par rapport à un plan diamétral longitudinal du tube interne.

5. Dispositif selon la revendication 4, caractérisé en ce que la zone (13c, 13'c) des bossages (13,13') la plus proche de l'extrémité emmanchée (**11b**) du tube interne, est plus proche de cette extrémité que la zone correspondante (**14b**) de l'épaulement de verrouillage axial.

6. Dispositif selon les revendications 2 et 5, caractérisé en ce que, sur au moins une partie de sa longueur, chaque bord latéral (**17c**) de la patte flexible (**17**) est espacé du bord latéral voisin (**15a-15b**) de la rainure (**15**) d'une distance sensiblement égale à l'épaisseur transversale de chaque bossage **(13-13')**.

7. Dispositif selon la revendication 6, caractérisé en ce que la patte **(17)** présente une ouverture **(18)** dont le contour est sensiblement identique à celui de l'épaulement **(14)**.

8. Dispositif selon l'une quelconque des revendications précédentes, caractérisé en ce que le tube externe **(12)** étant réalisé en tôle métallique mince, sa rainure longitudinale **(15)** ainsi que sa patte **(17)** sont obtenues par un découpage de sa paroi, de sorte que ladite patte constitue un élément élastiquement flexible de la paroi elle-même du tube externe.

9. Dispositif selon la revendication 3, caractérisé en ce que la zone **(24a)** du bossage **(23)** la plus éloignée de l'extrémité emmanchée **(22b)** du tube interne constitue l'épaulement de verrouillage axial.

10. Dispositif selon la revendication 3, caractérisé en ce que la patte flexible **(27)** est métallique et présente au moins une ouverture **(28)** dont le contour est sensiblement identique à celui du bossage **(23)**.

11. Dispositif selon la revendication 4 et la revendication 10, caractérisé en ce que les deux ouvertures **(28-28')** de la patte flexible **(27)** sont séparées par une languette **(21d)** dont la largeur correspond sensiblement à la distance entre les deux faces longitudinales en regard **(23a-23'b)** des deux bossages **(23-23')**.

12. Dispositif selon l'une quelconque des revendications 9, 10 et 11, caractérisé en ce que la patte flexible **(27)** est constituée par le repli d'un pontet métallique **(29)** fixé, de préférence par sertissage, à l'extrémité du tube externe.

13. Dispositif selon la revendication 12, caractérisé en ce que, dans la position de verrouillage de la patte flexible **(47)**, son extrémité libre, de préférence en forme de crochet **(37d)**, est située dans un logement **(39a)** prévu en correspondance dans la face supérieure du pontet **(39)**.

14. Dispositif selon la revendication 12, caractérisé en ce qu'un organe **(51)** faisant ressort et mobile par rapport au pontet **(49)** est attelé, dans une première position, à la patte flexible **(47)** avant emmanchement des tubes, ledit organe étant susceptible d'occuper une position visuellement différente de la première, lorsque la patte flexible est dans sa position de verrouillage axial après emmanchement des tubes.

15. Dispositif selon la revendication 14, caractérisé en ce que l'organe mobile par rapport au pontet est constitué par un coulisseau élastique **(51)**, dont la section est en forme de **U** et dont l'une des branches **(51c)** est en appui sur un crochet **(47c)** solidaire de la patte **(47)**, tant que celle-ci n'est pas dans sa position de verrouillage axial.

**Patentansprüche**

1. Vorrichtung zum Blockieren zweier koaxialer, ineinanderzusteckender Rohre, umfassend eine in radialer Richtung elastisch flexible Längspratze, die mit dem Außenrohr verbunden ist und mindestens eine Zone aufweist, die nach dem Ineinanderstecken der beiden Rohre in axiale Anlage an eine Schulter kommen kann, welche entsprechend auf der Außenseite des Innenrohres vorgesehen ist und in bezug auf diese radial absteht, dadurch gekennzeichnet, daß die Wand des Außenrohres (2, 12, 22) eine am Rohrende offene Rille (5, 15, 25) aufweist, deren Seitenränder parallel zur Achse des Rohres sind, und daß die Außenseite des Innenrohres (1, 11, 21) zwei radial abstehende Führungsflächen (3a-3b, 13b-13'a, 23b-23'a) aufweist, welche Flächen parallel zur Rohrachse verlaufen und in einem Abstand voneinander angeordnet sind, der im wesentlichen gleich ist wie der die Seitenränder der Rille des Außenrohres trennende Abstand, wobei das freie Ende der Blockierpratze (7, 17, 27) im wesentlichen in der Querebene des Endes des Außenrohres liegt.

2. Vorrichtung nach Anspruch 1, dadurch gekennzeichnet, daß die flexible Pratze (17, 27) aus Metall ist und im wesentlichen gegenüber der Längsrille (15, 25) des Außenrohres liegt, und daß ihre diametrale Symmetrieebene in Längsrichtung identisch mit jener der Rille ist.

3. Vorrichtung nach Anspruch 1, dadurch gekennzeichnet, daß die am Innenrohr vorgesehenen Führungsflächen (3a-3b, 13b-13'a, 23b-23'a) durch die Seitenflächen gebildet sind, die durch die einander gegenüberliegenden Seitenflächen mindestens eines länglichen Wulstes (3, 13-13', 23-23'), der von der Außenseite des Innenrohres radial absteht, gebildet sind.

4. Vorrichtung nach Anspruch 3, dadurch gekennzeichnet, daß zwei Wülste (13-13', 23-23') vorgesehen sind, die in bezug auf eine diametrale Längsebene des Innenrohres zueinander symmetrisch sind.

5. Vorrichtung nach Anspruch 4, dadurch gekennzeichnet, daß die Zone (13c, 13'c) der Wülste (13, 13'), die dem eingesteckten Ende (11b) des Innenrohres am nächsten ist, näher diesem Ende liegt als die entsprechende Zone (14b) der Schulter der axialen Blockierung.

6. Vorrichtung nach den Ansprüchen 2 und 5, dadurch gekennzeichnet, daß zumindest über einen Teil ihrer Länge jeder Seitenrand (17c) der flexiblen Pratze (17) vom benachbarten Seitenrand (15a-15b) der Rille (15) in einem Abstand angeordnet ist, der im wesentlichen gleich der Dicke jedes Wulstes (13-13') in Querrichtung ist.

7. Vorrichtung nach Anspruch 6, dadurch gekennzeichnet, daß die Pratze (17) eine Öffnung (18) aufweist, deren Außenumfang im wesentlichen mit jenem der Schulter (14) identisch ist.

8. Vorrichtung nach einem der vorhergehenden Ansprüche, dadurch gekennzeichnet, daß, da das Außenrohr (12) aus dünnem Metallblech hergestellt ist, seine Längsrille (15) sowie seine Pratze (17) durch Einschneiden seiner Wand erhalten werden, sodaß die Pratze ein elastisch flexibles Element der Wand selbst des Außenrohres bildet.

9. Vorrichtung nach Anspruch 3, dadurch gekennzeichnet, daß die Zone (24a) des vom eingesteckten Ende (22b) des Innenrohres am weitesten entfernten Wulstes (23) die Schulter der axialen Blockierung bildet.

10. Vorrichtung nach Anspruch 3, dadurch gekennzeichnet, daß die flexible Pratze (27) aus Metall ist und mindestens eine Öffnung (28) aufweist, deren Außenumfang im wesentlichen mit jenem des Wulstes (23) identisch ist.

11. Vorrichtung nach Anspruch 4 und Anspruch 10, dadurch gekennzeichnet, daß die beiden Öffnungen (28-28') der flexiblen Pratze (27) durch eine Zunge (21d) getrennt sind, deren Breite im wesentlichen dem Abstand zwischen den beiden gegenüberliegenden Längsseiten (23a-23'b) der beiden Wülste (23-23') entspricht.

12. Vorrichtung nach einem der Ansprüche 9, 10 und 11, dadurch gekennzeichnet, daß die flexible Pratze (27) durch die Auffaltung einer Metallbrücke (29) gebildet ist, die vorzugsweise durch Bördelung am Ende des Außenrohres befestigt ist.

13. Vorrichtung nach Anspruch 12, dadurch gekennzeichnet, daß das vorzugsweise als Haken (37d) ausgebildete, freie Ende der flexiblen Pratze (47) in deren Blockierstellung in einer entsprechend in der Oberseite der Brücke (39) vorgesehenen Aufnahme (39a) liegt.

14. Vorrichtung nach Anspruch 12, dadurch gekennzeichnet, daß ein federbildendes und in bezug auf die Brücke (49) bewegliches Organ (51) in einer ersten Stellung an der flexiblen Pratze (47) vor Ineinanderstecken der Rohre angebracht ist, welches Organ eine von der ersten Position sichtbar unterschiedliche Position einnehmen kann, wenn sich die flexible Pratze nach dem Ineinanderstecken der Rohre in ihrer axialen Blockierstellung befindet.

15. Vorrichtung nach Anspruch 14, dadurch gekennzeichnet, daß das gegenüber der Brücke bewegliche Organ durch eine elastische Gleitkufe (51) gebildet ist, die im Querschnitt U-förmig ist und deren einer Schenkel (51c) an einem mit der Pratze (47) verbundenen Haken (47c) anliegt, wenn sich erstere nicht in der axialen Blockierstellung befindet.

## Claims

1. Device for locking two coaxial tubes designed to be fitted into each other, comprising a longitudinal tab which is elastically flexible in the radial direction, connected to the outer tube and presenting at least one area capable of coming into axial abutment, once the two tubes have been fitted together, with a shoulder provided in register on the outer face of the inner tube and projecting radially with respect therefrom, characterized in that the wall of the outer tube (2, 12, 22) presents a groove (5, 15, 25) open at the end of the tube, whose lateral edges are parallel to the axis of the tube, and in that the outer face of the inner tube (1, 11, 21) presents two radially projecting guide surfaces (3a-3b, 13'a, 23b-23'a), said surfaces being parallel to the axis of the tube and spaced apart from each other by a distance substantially equal to the one separating the lateral edges of the groove of the outer tube, while the free end of the locking tab (7, 17, 27) is located substantially in the transverse plane of the end of the outer tube.

2. Device according to claim 1, characterized in that the flexible tab (17, 27) is made of metal and is located substantially opposite the longitudinal groove (15, 25) of the outer tube, and in that its longitudinal diametral plane of symmetry is the same as that of said groove.

3. Device according to claim 1, characterized in that the guide surfaces (3a-3b, 13b-13'a, 23b-23'a) provided on the inner tube are constituted by the lateral faces, opposite one another, of at least one elongated boss (3, 13-13', 23-23') projecting radially on the outer face of the inner tube.

4. Device according to claim 3, characterized in that there exist two bosses (13-13', 23-23') symmetrical to each other with respect to a longitudinal diametral plane of the inner tube.

5. Device according to claim 4, characterized in that the area (13c, 13'c) of the bosses (13, 13') closest to the fitted end (11b) of the inner tube, is closer to said end than the corresponding area (14b) of the axial locking shoulder.

6. Device according to claims 2 and 5, characterized in that, over at least a part of its length, each lateral edge (17c) of the flexible tab (17) is spaced from the adjacent lateral edge (15a-15b) of the groove (15) by a distance substantially equal to the transverse thickness of each boss (13-13').

7. Device according to claim 6, characterized in that the tab (17) presents an opening (18) whose contour is substantially identical to that of the shoulder (14).

8. Device according to any one of the preceding claims, characterized in that the outer tube (12) being made of thin sheet metal, its longitudinal groove (15) as well as its tab (17) are obtained by a cut-out of its wall, so that said tab constitutes an elastically flexible element of the wall itself of the outer tube.

9. Device according to claim 3, characterized in that the area (24a) of the boss (23) most remote from the fitted end (22b) of the inner tube constitutes the axial locking shoulder.

10. Device according to claim 3, characterized in that the flexible tab (27) is made of metal and presents at least one opening (28) whose contour is substantially identical to that of boss (23).

11. Device according to claim 4 and claim 10, characterized in that the two openings (28-28') of the flexible tab (27) are separated by a tongue (21d) whose width corresponds substantially to the distance between the two opposite longitudinal faces (23a-23'b) of the two bosses (23-23').

12. Device according to any one of claims 9, 10, and 11, characterized in that the flexible tab (27) is constituted by the fold of a metal bridge (29) fixed, preferably by crimping, to the end of the outer tube.

13. Device according to claim 12, characterized in that, in the position of locking of the flexible tab (47), its free end, preferably in the form of a hook (37d), is located in a housing (39a) provided in register in the upper face of the bridge (39).

14. Device according to claim 12, characterized in that a member (51) forming spring and mobile with respect to the bridge (49) is coupled, in a first position, to the flexible tab (47) before the tubes are fitted together, said member being capable of occupying a position visually different from the first, when the flexible tab is in its axial locking position after the tubes have been fitted together.

15. Device according to claim 14, characterized in that the member mobile with respect to the bridge is constituted by an elastic slide (51) whose section is in the form of a U and of which one of the arms (51c) is in abutment on a hook (47c) fast with the tab (47), as long as the latter is not in its axial locking position.

_fig.1b_

_fig.1a_

_fig.2_

_fig.4_

_fig.3_

*fig.7*

*fig.5b*

*fig.5a*

*fig.8*

*fig.6b*

*fig.6a*

EP 0 443 895 B1

EP 0 443 895 B1

Fig_9a

Fig_9b

Fig_11

Fig_10a

Fig_10b

Fig_12

13

fig_13

51a 51 49 F2 51c 49b 47e
47a 47c
51d
43, 43'
41

42 51b 51f 47b 42b
43c, 43'c

*fig_14*

49
42b
49b
51 51d
51f 48
51c
47c
51a 47e
51e 45
47a 48'
51b 51g 47

42

*fig_15*

49 51c 51d 47e
51a
43c, 43'c 43, 43'

42 51b 51f f' 41

*fig_16*